# EUROPEAN PATENT APPLICATION

(11) **EP 4 538 789 A1**
(43) Date of publication of application: **16.04.2025**
(21) Application number: 24203813.1
(22) Date of filing: 01.10.2024
(51) Int. Cl.: G03B 15/05, G03B 17/14, G03B 17/56, G03B 37/04, G08B 13/196

(54) **IMAGING DEVICE**

(30) Priority: 12.10.2023 JP 2023177020; 28.08.2024 JP 2024146679
(71) Applicant: CANON KABUSHIKI KAISHA, Tokyo 146-8501 (JP)
(72) Inventor: ONO, Shuhei, Tokyo, 146-8501 (JP)
(74) Representative: TBK

(57) **Abstract**

An imaging device includes a plurality of lens units, a plurality of lighting units; a lens holder that detachably supports a lens unit of the plurality of lens units and a lighting unit of the plurality of lighting units; and a circular guide member that guides an imaging unit including the lens holder in a circumferential direction.

## Description

### BACKGROUND OF THE INVENTION

### Field of the Invention

The present disclosure relates to an imaging device including a lighting device.

### Description of the Related Art

In the related art, in a multi-lens camera device including a lighting device, in order to appropriately illuminate an imaging range of a plurality of camera modules, a configuration in which a wide area is continuously illuminated using a number of lighting devices equal to or greater than the number of camera modules has been common.

For example, Japanese Patent Application Laid-Open No. 2019-105822 discloses a structure in which a lighting unit equipped with a number of lighting devices equal to the number of camera modules is disposed in a central portion of a multi-lens camera to illuminate an imageable range of the camera modules.

However, the lighting device of an imaging device disclosed in Japanese Patent Application Laid-Open No. 2019-105822 is fixed. For this reason, even when the lens unit is replaced with another lens unit with different optical specifications, a configuration in which a non-imaging range is also illuminated at all times is required to appropriately illuminate an imaging range at all times.

### SUMMARY OF THE INVENTION

The present disclosure provides an imaging device including a lighting unit capable of appropriately illuminating an imaging range in the imaging device configured such that a lens unit having different optical specifications is replaceable.

An imaging device of the present disclosure includes a plurality of lens units, a plurality of lighting units; a lens holder that detachably supports a lens unit of the plurality of lens units and a lighting unit of the plurality of lighting units; and a circular guide member that guides an imaging unit including the lens holder in a circumferential direction.

According to the present disclosure, it is possible to appropriately illuminate an imaging range.

Further features of the present invention will become apparent from the following description of exemplary embodiments (with reference to the attached drawings).

### BRIEF DESCRIPTION OF THE DRAWINGS

Fig. 1 is a side view of a camera device according to a first embodiment.
Fig. 2 is a perspective view of main parts of the camera device according to the first embodiment.
Fig. 3 is an exploded perspective view of main parts of a camera module according to the first embodiment.
Fig. 4 is a cross-sectional view of the camera device in the vertical direction according to the first embodiment.
Figs. 5A and 5B are cross-sectional views of main parts of the camera device according to the first embodiment.
Figs. 6A-6C is a perspective view of the camera module according to the first embodiment.
Fig. 7 is an exploded perspective view of main parts of the camera module according to the first embodiment.
Fig. 8 is a cross-sectional view of the camera module according to the first embodiment.
Fig. 9 is a cross-sectional view of the camera device in the horizontal direction according to the first embodiment.
Fig. 10 is an exploded perspective view of main parts of a wide-angle specification camera module according to the first embodiment.
Fig. 11 is a cross-sectional view of the wide-angle specification camera module according to the first embodiment.
Fig. 12 is a cross-sectional view of the wide-angle specification camera module in the horizontal direction according to the first embodiment.
Fig. 13 is an exploded perspective view of main parts of a telephoto specification camera module according to the first embodiment.
Fig. 14 is a cross-sectional view of the telephoto specification camera module according to the first embodiment.
Fig. 15 is a cross-sectional view of a telephoto specification camera device in the horizontal direction according to the first embodiment.
Figs. 16A and 16B are cross-sectional views of the camera module according to the first embodiment.
Fig. 17 is a graph showing optical characteristics of the camera module according to the first embodiment.
Fig. 18 is an exploded perspective view of main parts of a camera module according to a second embodiment.
Fig. 19 is an exploded perspective view of main parts of the camera module according to the second embodiment.

### DESCRIPTION OF THE EMBODIMENTS

Hereinafter, embodiments of the present disclosure will be described in detail with reference to the drawings.

### <First embodiment>

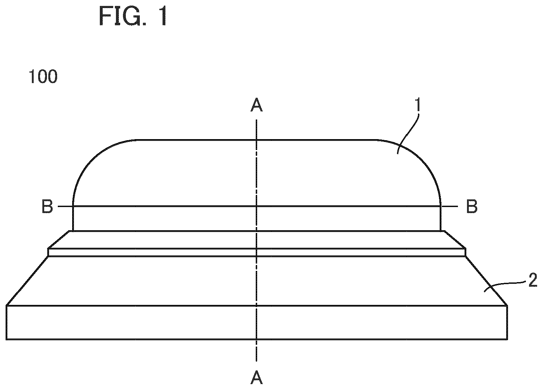

Hereinafter, a camera device according to a first embodiment of the present disclosure will be described with reference to Figs. 1 to 17. Fig. 1 is a side view of a camera device 100 as an example of an imaging device according to the first embodiment. As shown in Fig. 1, the camera device 100 includes a dome cover 1 and a base 2.

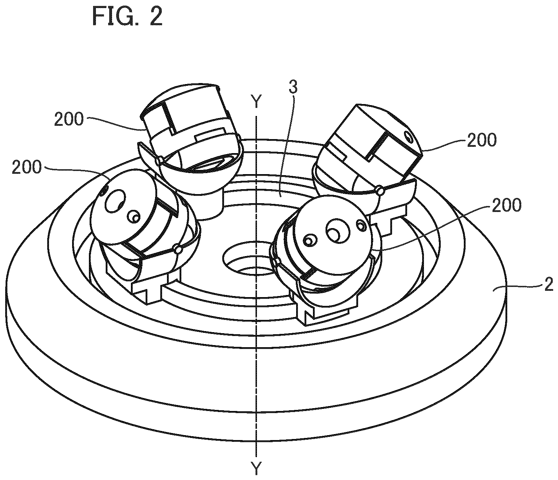

Fig. 2 is a perspective view of main parts of the camera device 100 according to the first embodiment in a state where the dome cover 1 removed. As shown in Fig. 2, in the camera device 100, a plurality of camera modules 200 are mounted on a shift rail 3 provided on the base 2.

In this example, the camera device 100 is configured to include four camera modules 200 mounted thereon, and the camera device 100 is capable of simultaneously performing imaging in four different imaging ranges.

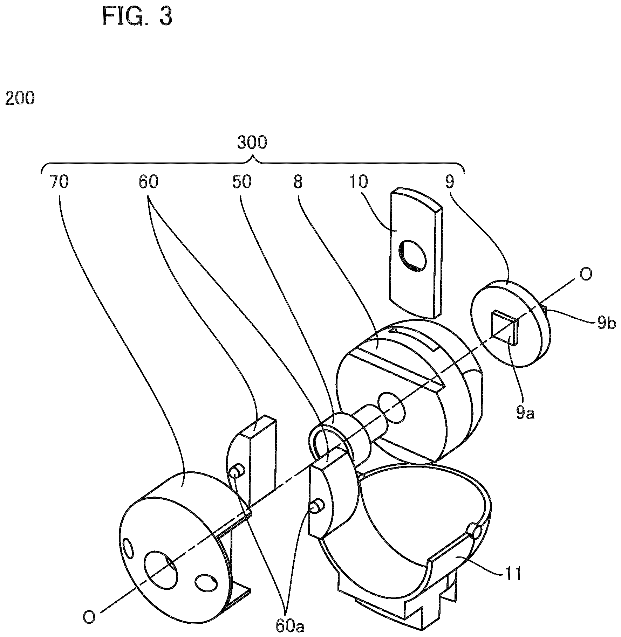

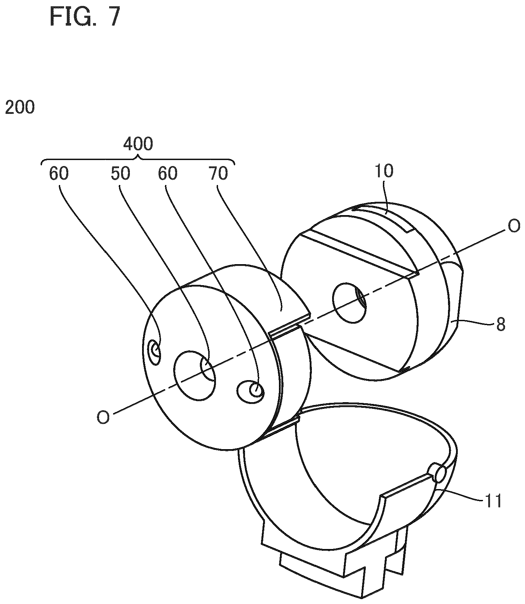

Fig. 3 is an exploded perspective view of main parts of the camera module 200 according to the first embodiment. The camera module 200 includes an imaging unit 300 and a tilt base 11. The imaging unit 300 is held by a tilt base 11. Furthermore, the imaging unit 300 includes a replacement assembly 400 (Fig. 7) and a lens holder 8. The replacement assembly 400 includes a lens unit 50, a lighting device 60, and a light blocking member 70. Although two lighting devices 60 are provided in the drawing, one lighting device 60 or three or more lighting devices 60 may be provided. The lens holder 8 includes an imaging element 9a, a sensor board 9, and an optical filter unit 10. Furthermore, the lens holder 8 on which the imaging element 9a and the sensor board 9 are mounted is an example of an imaging part. The lens unit 50 is equipped with an optical system having an optical axis O. The lens unit 50 is detachable from the lens holder 8. Thereby, the lens unit 50 can be replaced with lens units 50 having various focal lengths. The sensor board 9 has a sensor board connector 9b mounted thereon. The lighting device 60 illuminates the entire area imaged by the lens holder 8. In addition, the lighting device 60 is detachable from the lens holder 8 and it is preferable that the lighting device 60 be detachable integrally from the lens holder 8 together with the lens unit 50. The lighting device 60 has a light emitting element 60a. The lighting device 60 is also equipped with a lighting lens (not shown). A lighting angle of the lighting device 60 is adjusted by the lighting lens. The lighting lens is detachable from the lens holder 8. The optical filter unit 10 can insert and remove at least one optical filter into and from an optical path through which external light passes.

The imaging unit 300 is equipped with the lens unit 50, the lighting device 60, and the lens holder 8, and is movable along a circular guide member. More specifically, the tilt base 11 that supports the imaging unit 300 engages with a circular guide member and is movable (in the circumferential direction) along the circular guide member. In addition, a plurality of imaging units 300 are provided along the circular guide member. The imaging unit 300 performs imaging by the imaging element 9a forming an image of light rays passing through the lens unit 50. In addition, the imaging unit 300 can also perform imaging in a state where an area to be imaged is illuminated by the lighting device 60 even in a dark environment such as at night. Furthermore, in the imaging unit 300, the light blocking member 70 is disposed to prevent ghosts caused by the incidence of light from the lighting device 60 on the lens unit 50. The light blocking member 70 is detachable from the lens holder 8 and blocks light incident from the outside of the lens holder 8. The light blocking member 70 is made of an elastic material and is assembled to be pressed against the inside of the dome cover 1. Thus, the light blocking member 70 can prevent ghosts caused by light from the lighting device 60 being reflected on the inner surface of the dome cover 1 and being incident on the lens unit 50. It is preferable that the light blocking member 70 be detachable integrally from the lens holder 8 together with the lens unit 50 and the lighting device 60.

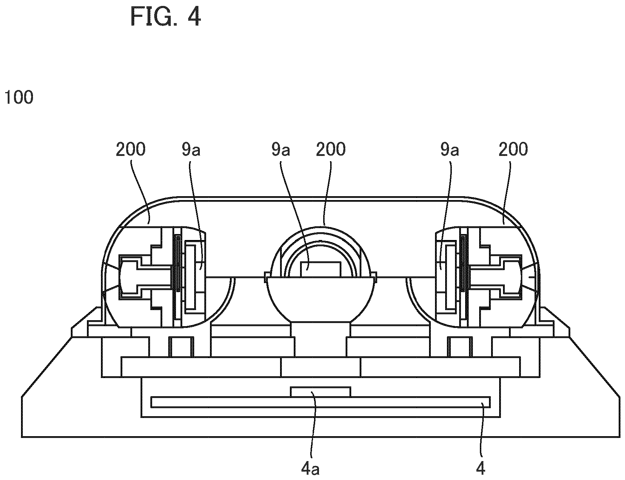

Fig. 4 is a cross-sectional view of the camera device in the vertical direction according to the first embodiment. A control board 4 that controls imaging and communication of the camera device 100 is mounted inside the base 2. The control board 4 and the camera module 200 communicate with each other through wirings (not shown) that connect a control board connector 4a mounted on the control board 4 to the sensor board connector 9b mounted on the sensor board 9.

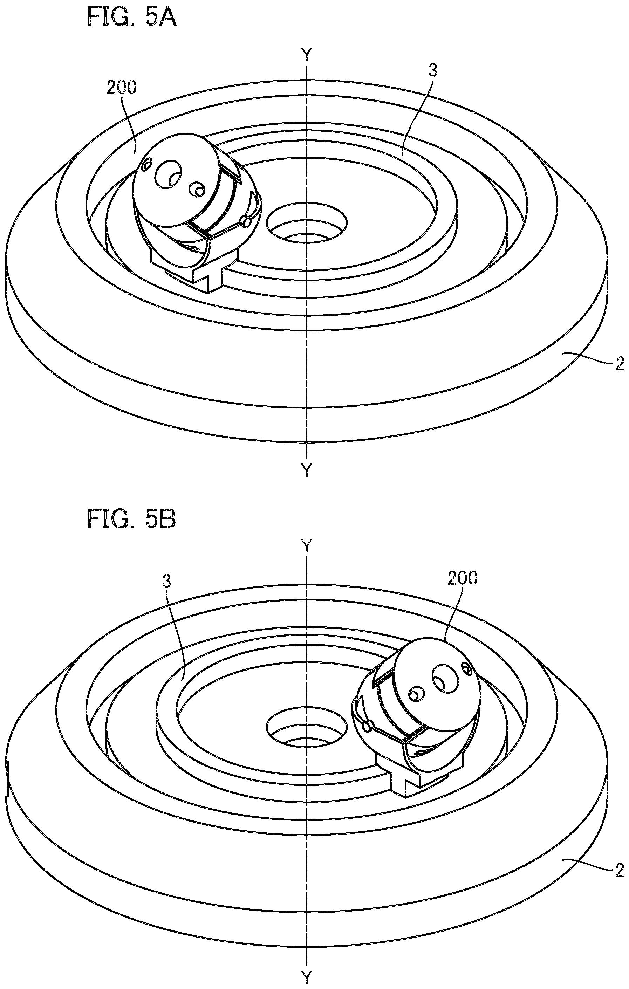

Figs. 5A and 5B are perspective views of main parts of the camera device according to the first embodiment. In addition, Figs. 5A and 5B show only one camera module 200.

The camera module 200 is held movably with respect to the shift rail 3. The shift rail 3 has a circular shape centered on a shift axis Y Thus, the camera module 200 can rotate about the shift axis Y, for example, to move from the position shown in Fig. 5A to the position shown in Fig. 5B.

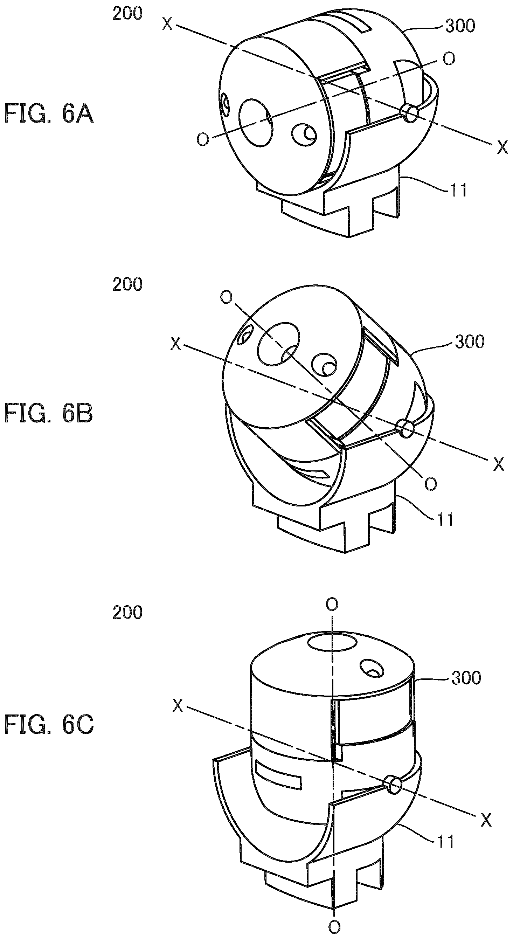

Figs. 6A to 6C are perspective views of the camera module according to the first embodiment. The imaging unit 300 of the camera module 200 is held by the tilt base 11 in a state where it can be rotary driven about a tilt axis X, which is perpendicular to the shift axis Y and perpendicular to the optical axis O. In addition, the plurality of camera modules 200 can also be rotary driven about a pan axis (not shown).

Fig. 6A shows a state where the camera module 200 is oriented in the horizontal direction. Fig. 6C shows a state where the camera module 200 faces the zenith. Fig. 6B shows a state between the state shown in Fig. 6A and the state shown in Fig. 6C.

In this manner, the camera device 100 can dispose the plurality of camera modules 200 at any positions around the shift axis Y The camera device 100 can also adjust the posture of the imaging unit 300 at any angle around the tilt axis X. Furthermore, the camera device 100 can adjust the posture of the imaging unit 300 at any angle around the pan axis. Thus, the camera device 100 allows a user to selectively perform imaging. from a plurality of any viewpoints.

Fig. 7 is an exploded perspective view of main parts of the camera module according to the first embodiment. The camera module 200 is configured such that the replacement assembly 400, which is constituted by the lens unit 50, the lighting device 60, and the light blocking member 70, is held to be detachable from (replaceable on) the lens holder 8. When removing the replacement assembly 400 from the lens holder 8, first, the imaging unit 300 including the replacement assembly 400 and the lens holder 8 is removed from the tilt base 11. Then, the replacement assembly 400 is removed from the lens holder 8. Alternatively, only the replacement assembly 400 may be removed from the lens holder 8, which is still held in the tilt base 11.

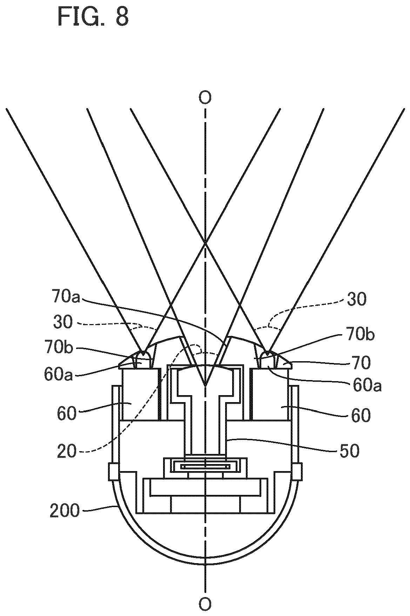

Fig. 8 is a cross-sectional view of the camera module according to the first embodiment. Fig. 8 shows a cross-section including the optical axis O of the camera module 200 illuminated by the lighting device 60.

The light blocking member 70 is provided with an imaging opening 70a. The imaging opening 70a is an example of a first opening through which external light passes. Light rays necessary for imaging by the lens unit 50 pass through the imaging opening 70a and are incident on the lens unit 50 as shown by a lens angle of view 20. The imaging opening 70a has a tapered shape that widens toward a subject in the optical axis direction so as not to obstruct the incidence of the light rays necessary for imaging by the lens unit 50. This tapered shape is an example of a shape that does not block light passing through the lens unit 50.

The light blocking member 70 is also provided with a lighting opening 70b. The lighting opening 70b is an example of a second opening through which light emitted from the lighting device 60 passes. The lighting opening 70b has a tapered shape that widens toward the outside so as not to obstruct the passage of light emitted from the lighting device 60. This tapered shape is an example of a shape that does not block light emitted from the lighting device 60.

It is preferable that the lens unit 50 be detachable integrally from the lens holder 8. It is also preferable that the lighting device 60, the lens unit 50, and the light blocking member 70 be detachable integrally from the lens holder 8.

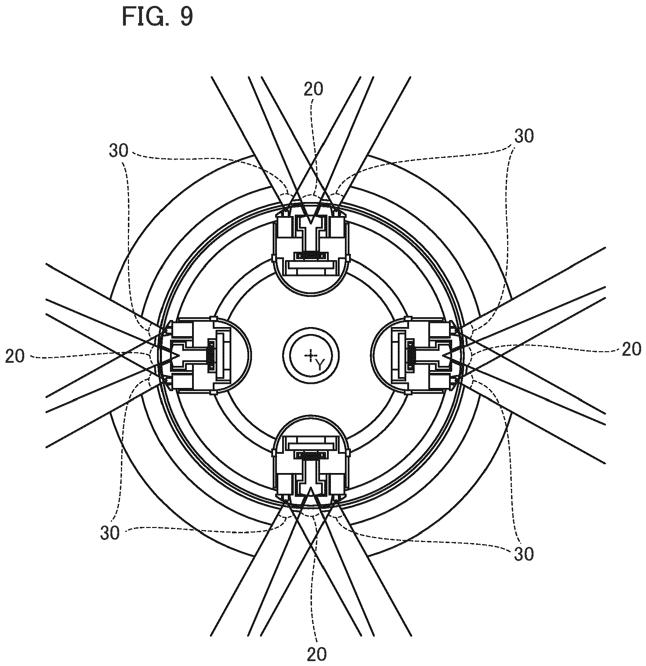

Fig. 9 is a cross-sectional view of the camera device in the horizontal direction according to the first embodiment. Fig. 9 shows a cross-section of the camera device 100 when the lighting device 60 is in a usable state, which is taken along a horizontal cross-section B in Fig. 1.

A lighting device irradiation angle 30 is sufficiently larger than the lens angle of view 20. For this reason, the lighting device 60 can appropriately illuminate the entire area imaged by the camera module 200. In contrast, the lighting device irradiation angle 30 is not excessively larger than the lens angle of view 20, and thus there is little illumination light outside the area imaged, and there is also less unnecessary power consumption. Thus, the camera device 100 can suppress the amount of heat generated and does not need to be made large for a heat dissipation structure or the like.

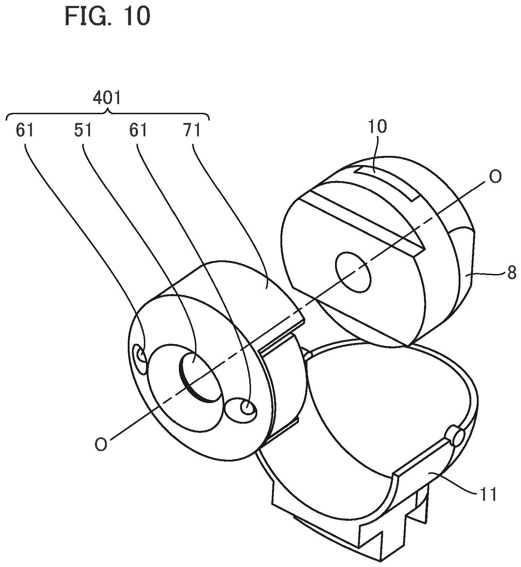

Fig. 10 is an exploded perspective view of main parts of a wide-angle specification camera module according to the first embodiment. Fig. 10 also shows a state where the replacement assembly 400 of the camera module 200 is removed and a wide-angle specification assembly 401 is assembled. The wide-angle specification assembly 401 includes a wide-angle lens unit 51, a wide-angle lighting device 61, and a wide-angle light blocking member 71.

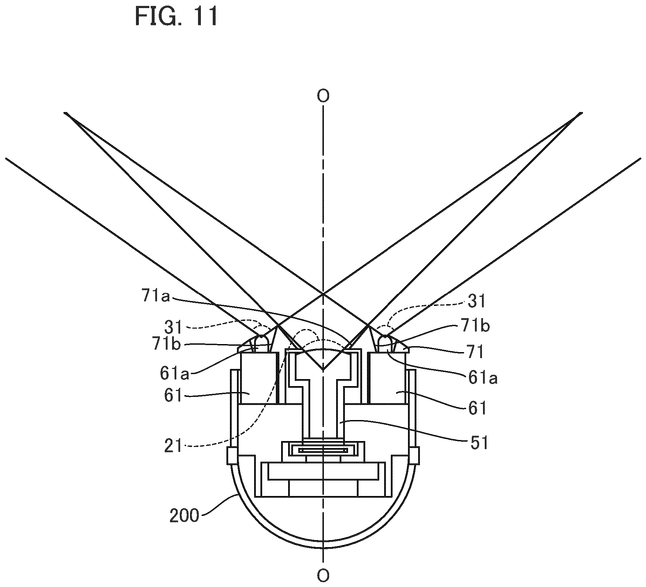

Fig. 11 is a cross-sectional view of the wide-angle specification camera module according to the first embodiment. Fig. 11 also shows a cross-section including the optical axis O of the camera module 200 illuminated by the wide-angle lighting device 61.

The wide-angle light blocking member 71 is provided with a wide-angle imaging opening 71a. The wide-angle imaging opening 71a is an example of a first opening through which external light passes. Light rays necessary for imaging by the wide-angle lens unit 51 pass through the wide-angle imaging opening 71a and are incident on the wide-angle lens unit 51 as shown by a wide-angle lens angle of view 21.

An angle between the wide-angle lens angle of view 21 and the optical axis O is larger than an angle between the lens angle of view 20 and the optical axis O. The wide-angle imaging opening 71a has a tapered shape that widens toward a subject in the optical axis direction so as not to obstruct the incidence of the light rays. That is, the wide-angle imaging opening 71a has a shape that does not block light passing through the wide-angle lens unit 51. An angle between the wide-angle imaging opening 71a and the optical axis O is larger than an angle between the imaging opening 70a and the optical axis O.

The wide-angle light blocking member 71 is provided with a wide-angle lighting opening 71b. The wide-angle lighting opening 71b is an example of a second opening through which light emitted from the wide-angle lighting device 61 passes. Illumination light of the wide-angle lighting device 61 is light rays output at an angle shown by a wide-angle lighting device irradiation angle 31, and is emitted to a subject through the wide-angle lighting opening 71b. A shape that does not obstruct irradiation with light by the wide-angle lighting device 61 is adopted for the wide-angle lighting opening 71b. As such a shape of the wide-angle lighting opening 71b, for example, a tapered shape that widens toward a subject in the optical axis direction is adopted . This tapered shape is an example of a shape that does not block light emitted from the wide-angle lighting device 61. Furthermore, an angle between the wide-angle lighting device irradiation angle 31 and the optical axis O is larger than an angle between the lighting device irradiation angle 30 and the optical axis O.

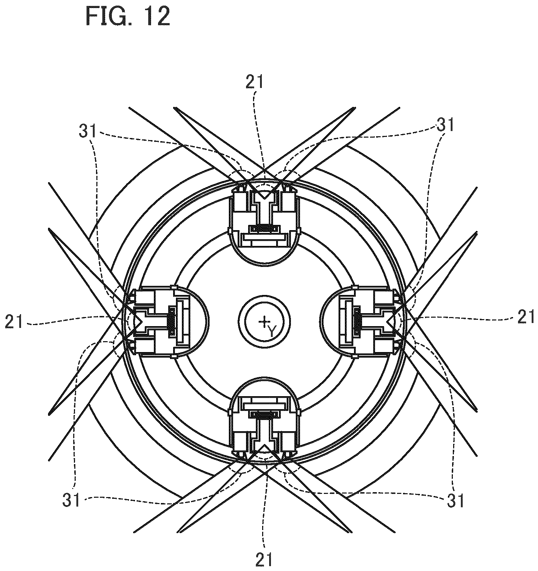

Fig. 12 is a cross-sectional view of the wide-angle specification camera module in the horizontal direction according to the first embodiment. Fig. 12 is a cross-sectional view of the camera device according to the example when it has a wide-angle specification. Fig. 12 also shows a cross-section of the camera device 100 when the wide-angle lighting device 61 is in a usable state, which is taken along the horizontal cross-section B in Fig. 1.

The wide-angle lighting device irradiation angle 31 is sufficiently larger than the wide-angle lens angle of view 21. Thus, the wide-angle lighting device 61 can appropriately illuminate the entire area imaged by the camera module 200. In contrast, the wide-angle lighting device irradiation angle 31 is not excessively larger than the wide-angle lens angle of view 21, and thus there is little light emitted to the outside of an area imaged by the camera module 200, and there is also less unnecessary power consumption. Thus, the camera device 100 can suppress the amount of heat generated by the device and does not need to be made large for a heat dissipation structure or the like.

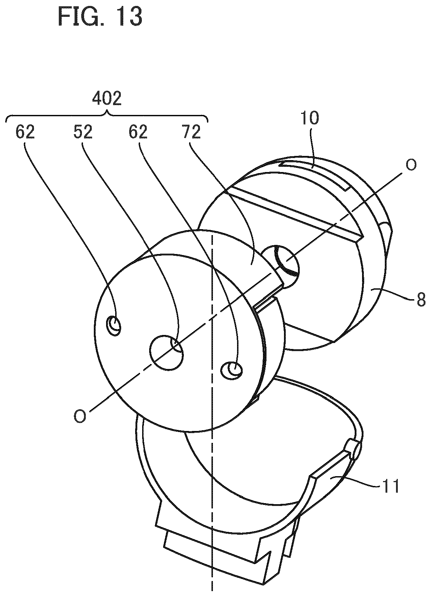

Fig. 13 is an exploded perspective view of main parts of a telephoto specification camera module according to the first embodiment. Fig. 13 is an exploded perspective view of main parts when a camera device according to the example has a telephoto specification. Fig. 13 also shows a state where the replacement assembly 400 of the camera module 200 is removed and a telephoto assembly 402 is assembled.

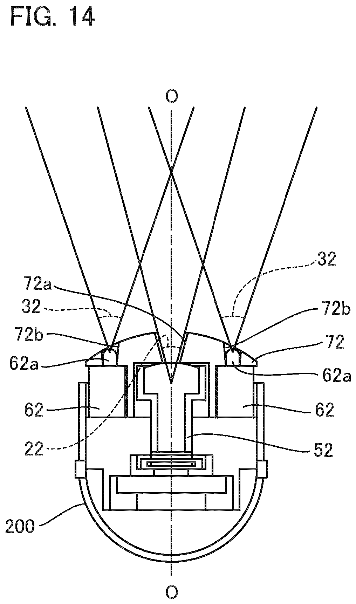

Fig. 14 is a cross-sectional view of the telephoto specification camera module according to the first embodiment. Fig. 14 is a cross-sectional view of the camera module 200 according to the example when it has a telephoto specification. Fig. 14 also shows a cross-section including the optical axis O of the camera module 200 when light is being output by the lighting device 62.

A telephoto light blocking member 72 is provided with a telephoto imaging opening 72a. The telephoto imaging opening 72a is an example of a first opening through which external light passes. Light rays necessary for imaging by a telephoto lens unit 52 pass through the telephoto imaging opening 72a and are incident on the telephoto lens unit 52 as shown by a telephoto lens angle of view 22.

An angle between the telephoto lens angle of view 22 and the optical axis O is smaller than an angle between the lens angle of view 20 and the optical axis O. A shape that does not obstruct incidence of light on the telephoto lens unit 52 is adopted for the telephoto imaging opening 72a. That is, a shape that does not block light passing through the telephoto lens unit 52 is adopted for the telephoto imaging opening 72a. As such a shape of the telephoto imaging opening 72a, for example, a tapered shape that widens toward a subject in the optical axis direction is adopted. This tapered shape is an example of a shape that does not block light that passes through the telephoto lens unit 52. Furthermore, an angle between the telephoto imaging opening 72a and the optical axis O is smaller than an angle between the imaging opening 70a and the optical axis O.

The telephoto light blocking member 72 is provided with a telephoto lighting opening 72b. The telephoto lighting device irradiation angle 32 is smaller than the wide-angle lighting device irradiation angle 31. The telephoto lighting opening 72b is an example of a second opening through which light emitted from the telephoto lighting device 62 passes. The light from the telephoto lighting device 62 is right rays output at an angle shown as a telephoto lighting device irradiation angle 32, and is emitted to a subject through the telephoto lighting opening 72b. The irradiation angle of the telephoto lighting device 62 is adjusted by a lens for illumination so as to be smaller than the irradiation angle of the wide-angle lighting device 61. A shape that does not obstruct irradiation with light by the telephoto lighting device 62 is adopted for the telephoto lighting opening 72b. That is, a shape that does not block light emitted from the telephoto lighting device 62 is adopted for the telephoto lighting opening 72b. For example, as such a shape, a tapered shape that widens toward a subject in the optical axis is adopted for the telephoto lighting opening 72b. In addition, an angle between the telephoto lighting device irradiation angle 32 and the optical axis O is larger than an angle between the lighting device irradiation angle 30 and the optical axis O.

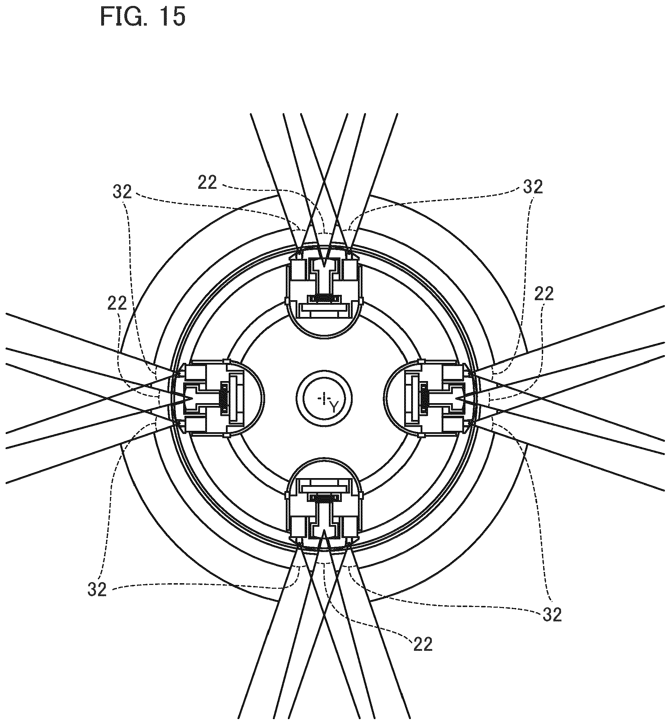

Fig. 15 is a cross-sectional view of the telephoto specification camera device in the horizontal direction according to the first embodiment. Fig. 15 is a cross-sectional view when the camera device 100 according to the example has a telephoto specification. Fig. 15 also shows a cross-section of the camera device 100 when the telephoto lighting device 62 is being used, which is taken along the horizontal cross-section B in Fig. 1.

The telephoto lighting device irradiation angle 32 is sufficiently larger than the telephoto lens angle of view 22. For this reason, the telephoto lighting device 62 can appropriately illuminate the entire area imaged by the camera module 200. In contrast, the telephoto lighting device irradiation angle 32 is not excessively larger than the telephoto lens angle of view 22, and thus there is little illumination light outside the area imaged, and there is also less unnecessary power consumption. Thus, the camera device 100 can suppress the amount of heat generated by the device and does not need to be made large for a heat dissipation structure or the like.

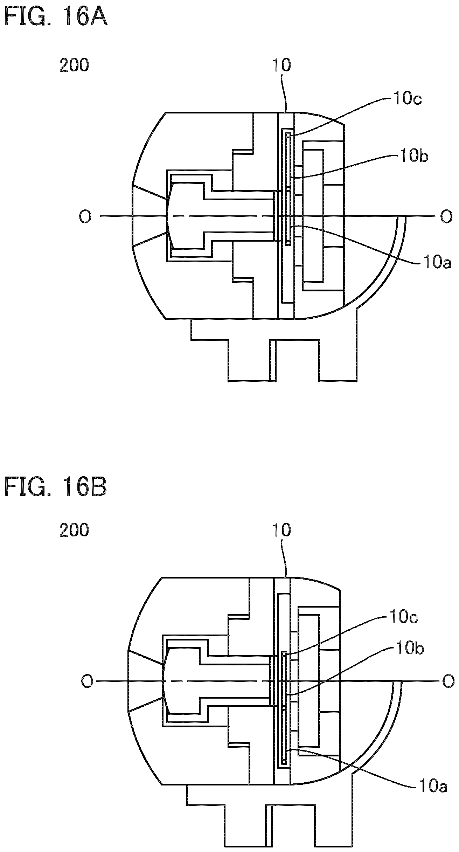

Figs. 16A and 16B are cross-sectional views of the camera module according to the first embodiment. An infrared cut filter 10a and a bandpass filter 10b, which are held by a filter holder 10c, are mounted inside the optical filter unit 10. The optical filter unit 10 is configured such that the infrared cut filter 10a or the bandpass filter 10b is positioned on the optical axis O.

Fig. 16A shows a state where the infrared cut filter 10a is located on the optical axis O. This state is a specification used mainly when images are captured in a bright environment such as during the day. At this time, the lighting device 60 is not used.

Fig. 16B shows a state where the bandpass filter 10b is located on the optical axis O. This state is a specification used mainly when images are captured in a dark environment such as at night. At this time, the lighting device 60 is used.

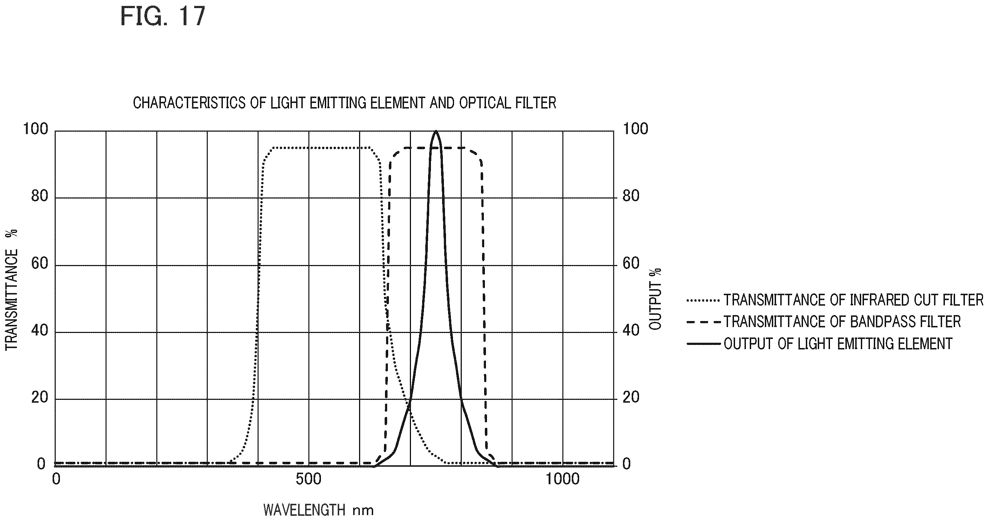

Fig. 17 is a graph showing optical characteristics of the camera module according to the first embodiment. The infrared cut filter 10a has a characteristic of transmitting light rays in a visible light region and not transmitting ultraviolet rays, infrared rays, and the like. The bandpass filter 10b has a characteristic of not transmitting light rays in a visible light region and transmitting only light rays in a certain frequency band in an infrared light region. At least a portion of the range of wavelengths of light of the lighting device 60 and the like overlaps at least a portion of the range of wavelengths of light transmitted by optical filters such as the infrared cut filter 10a and the bandpass filter 10b.

The light emitting element 60a is a light-emitting diode (LED) light source that emits light rays in a narrow frequency range with a peak at a specific frequency. As shown in Fig. 17, the frequency peak of the light rays of the light emitting element 60a is positioned within a transmission region of the bandpass filter 10b. In addition, the light emitting element 60a is fixed to the lens holder 8.

Thus, when the lighting device 60 is used with the bandpass filter 10b positioned on the optical axis O, illumination is performed by light rays that pass through the bandpass filter 10b, and thus an image to be captured becomes bright. In addition, since light rays in other frequency ranges are cut, the camera device 100 can capture clear images even in environments with fog, mist, and the like that block visible light.

The optical filter unit 10 may be detachable from the camera module 200. In this case, the optical filter unit 10 may be replaced with another optical filter unit equipped with an optical filter matched to the wavelength of light output by the lighting device 60 and the environment in which the camera device 100 is used.

### <Second Embodiment>

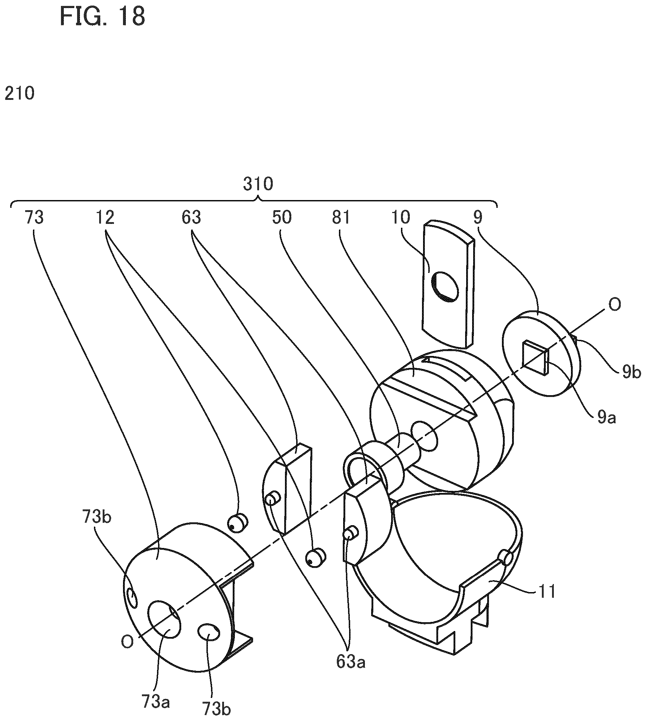

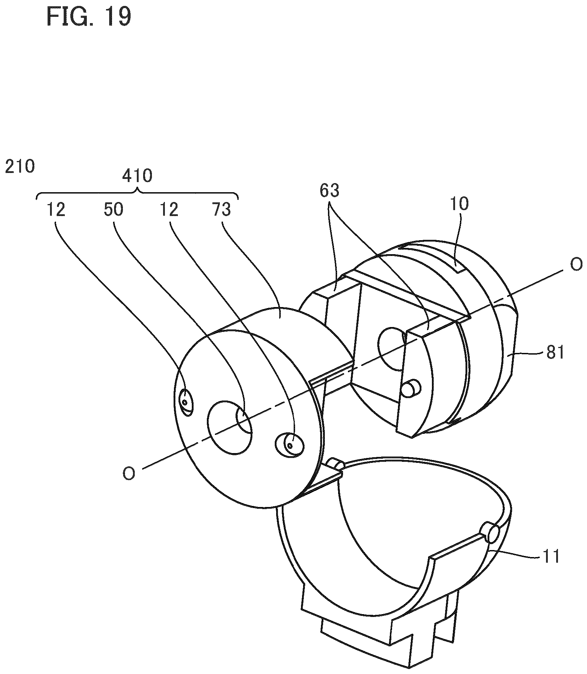

A camera device according to a second embodiment of the present disclosure will be described below with reference to Figs. 18 and 19. Fig. 18 is an exploded perspective view of main parts of the camera module according to the second embodiment of the present disclosure. A basic structure of the camera device according to the second embodiment is the same as that of the camera device 100 according to the first embodiment. The camera device according to the second embodiment has a configuration in which a plurality of camera modules 210 are movably held by a shift rail 3 provided on a base 2 and covered by a dome cover 1.

A basic structure of the camera module 210 is also the same as that of the camera module 200, but is different in that a lighting lens 12 is assembled to a light emitting element 63a of a lighting device 63 of the camera module 210. The lighting lens 12 is an optical element related to an irradiation angle of the lighting device 63. The lighting lens 12 is detachable from the lens holder 8, and an irradiation angle of the lighting device 63 can be changed by replacing the lighting lens 12 with one having different optical specifications.

Fig. 19 is an exploded perspective view of main parts of the camera module according to the second embodiment of the present disclosure. A replacement assembly 410 according to the second embodiment includes a lens unit 50, a light blocking member 73, and the lighting lens 12 of the lighting device 63. Thus, the lighting lens 12 of the lighting device 63 is replaceable with respect to a lens holder 81. That is, the lighting lens 12 is detachable from the lens holder 81. The light emitting element 63a of the lighting device 63 is fixed to the lens holder 81.

The light blocking member 73 is provided with an imaging opening 73a and a lighting opening 73b. Similarly to the imaging opening 70a according to the first embodiment, a tapered shape that widens toward a subject is adopted for the imaging opening 73a. In addition, a tapering angle is set in accordance with the angle of view of the lens unit 50 which is an assembly. Similarly, the lighting opening 73b has a tapered shape that widens toward the subject. The tapering angle is set in accordance with an irradiation angle of the lighting lens 12 which is an assembly.

With the above-described configuration, the camera device of the present disclosure appropriately illuminates an area to be imaged. In addition, as described above, the camera device of the present disclosure is equipped with replaceable camera modules having different optical specifications, thereby achieving both avoiding ghosts caused by the lighting device without increasing the size of the device and appropriately illuminating an area to be imaged.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

This application claims the benefit of Japanese Patent Application No. 2023-177020 filed October 12, 2023 and No. 2024-146679 filed August 28, 2024,which are hereby incorporated by reference wherein in their entirety.

## Claims

1. An imaging device comprising:
a plurality of lens units;
a plurality of lighting units;
a lens holder that detachably supports a lens unit of the plurality of lens units and a lighting unit of the plurality of lighting units; and
a circular guide member that guides an imaging unit including the lens holder in a circumferential direction.

2. The imaging device according to claim 1, wherein the lighting unit and the lens unit are detachable integrally from the lens holder.

3. The imaging device according to claim 1, further comprising a light blocking member that is detachable from the lens unit and blocks light incident from the outside.

4. The imaging device according to claim 3, wherein the lighting unit, the lens unit, and the light blocking member are detachable integrally from the lens holder.

5. The imaging device according to claim 4, wherein the light blocking member includes a first opening through which external light passes and a second opening through which light emitted from the lighting unit passes.

6. The imaging device according to claim 5, wherein the first opening has a shape that does not block light passing through the lens unit.

7. The imaging device according to claim 5, wherein the second opening has a shape that does not block light emitted from the lighting unit.

8. The imaging device according to claim 1, wherein the lens holder includes an imaging element.

9. The imaging device according to claim 1, wherein the lighting unit includes a light emitting element fixed to the lens holder and a lighting lens that is detachable from the lens holder.

10. The imaging device according to claim 1, wherein the lens holder includes an optical filter unit capable of inserting and removing at least one optical filter into and from an optical path through which external light passes.

11. The imaging device according to claim 10, wherein at least a portion of a range of wavelengths of light of the lighting unit overlaps at least a portion of a range of wavelengths of light transmitted by the optical filter.

12. The imaging device according to claim 1, wherein the imaging unit including the lens unit, the lighting unit, and the lens holder is capable of pan rotation and tilt rotation.

13. The imaging device according to claim 1, wherein the imaging unit is supported by a base member.
